# EUROPÄISCHE PATENTSCHRIFT

(11) **EP 0 965 517 B1**
(45) Veröffentlichungstag und Bekanntmachung des Hinweises auf die Patenterteilung: **03.11.2004**
(21) Anmeldenummer: 99108751.1
(22) Anmeldetag: 03.05.1999
(51) Int. Cl.: B62K 15/00

(54) **Klappbares Fahrrad**
Folding bicycle
Bicyclette pliante

(30) Priorität: 15.06.1998 DE 19826538
(43) Veröffentlichungstag der Anmeldung: 22.12.1999
(73) Patentinhaber: Bayerische Motoren Werke Aktiengesellschaft, 80788 München (DE)
(72) Erfinder: Wagner, Bernard, 80637 München (DE)

(56) Entgegenhaltungen:
- DE-A- 3 701 803
- DE-U- 9 309 353
- GB-A- 2 296 224

## Beschreibung

Die Erfindung betrifft ein klappbares Fahrrad nach dem Oberbegriff des Hauptanspruchs.

Die DE 37 01 803 A 1 beschreibt ein solches Fahrrad, bei dem der Rahmen aus einem vorderen Rahmenteil mit einer Lenkeinrichtung für ein Vorderrad und aus einem hinteren Rahmenteil mit einem Hinterrad besteht, wobei eine Verbindung zwischen vorderem und hinterem Rahmenteil mindestens aus einem um eine Querachse des Fahrrads schwenkbaren Drehgelenk gebildet ist. Die Querachse ist dekkungsgleich mit der Tretlagerachse. Die Lenkeinrichtung besteht aus einer das Vorderrad tragenden Gabel aus zwei Gabelrohren und einer Gabelbrücke, aus einer Lenkstange und aus einem die Lenkstange und die Gabel verbindenden Lenkerrohr.

Zum Zusammenklappen des Fahrrads wird sowohl das Vorderrad, als auch das Hinterrad ausgebaut. Dann ist es möglich, den hinteren Rahmenteil mit der Hinterradschwinge um die Drehachse, die mit der Tretlagerachse zusammenfällt, nach vorne zu schwenken. Zusätzlich kann zur Verkleinerung des Packmaßes noch die Lenkstange um 90° verdreht werden, wobei die Vorderradgabel ihre Lage beibehält. Dazu muß die starre Verbindung von Lenkstange und Vorderradgabel gelöst werden, was zur Folge hat, daß beim Aufbau des Fahrrads Vorderrad und Lenkstange jedesmal zueinander justiert werden müssen. Außerdem ist der Aufwand zum Zusammenklappen des Fahrrads dadurch sehr groß, weil beide Räder ausgebaut werden müssen, was sich auf wiederum negativ auf das Packmaß des zusammengeklappten Fahrrads auswirkt.

Aufgabe der Erfindung ist es, ein klappbares Fahrrad so zu gestalten, daß das Hinterrad beim Zusammenklappen und im zusammengeklappten Zustand des Fahrrads in der Hinterradgabel montiert verbleiben kann, daß ein möglichst kleines Packmaß erreicht wird und daß möglichst wenig Arbeitsaufwand entsteht, wenn aus dem zusammengeklappten ein fahrbereites Fahrrad hergestellt werden soll.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist das Fahrrad so gestaltet, daß, bei einem Einschlagwinkel der Lenkeinrichtung von neunzig Grad, zwischen den Gabelrohren und einer Fahrradmittenebene ein Abstand vorhanden ist, der es erlaubt, daß das Hinterrad, beim Schwenken des hinteren Rahmenteils um die Querachse, mitgeschwenkt werden kann, ohne daß es die Gabelrohre berührt.

So kann vorteilhafterweise beim Verschwenken des hinteren Rahmenteils das Hinterrad in der Hinterradgabel montiert verbleiben, wobei es beim Zusammenklappen des Fahrrads um die Querachse des Tretlagers herum geschwenkt wird, zum Beispiel bis zu seiner Anlage an einem unteren Rahmenrohr des Fahrradrahmens. Dazu ist es notwendig, daß die Lenkeinrichtung mit einem Einschlagwinkel von etwa 90° eingeschlagen ist. Dies verringert vorteilhafterweise das Packmaß, da die Lenkstange in Längsrichtung des Fahrrads verläuft und somit in Querrichtung des Fahrrads ein sehr kleines Packmaß entsteht.

Bei einer bevorzugten Ausführung der Erfindung wird der Abstand zwischen den Gabelrohren und der Fahrradmittenebene bei einem Einschlagwinkel der Lenkeinrichtung von 90° durch die Gestaltung der Gabelbrücke erreicht. Diese bildet eine Verbindung zwischen den Gabelrohren und dem Lenkerrohr mit einem Versatz zwischen deren Längsachsen. Dieser Versatz ist vorzugsweise, in einer Stellung der Lenkeinrichtung für Geradeausfahrt, in Längsrichtung des Fahrrads gerichtet. Dadurch entsteht der Abstand, der zum Einschwenken des Hinterrads bis zu seiner Anlage am unteren Rahmenrohr notwendig ist, vorteilhafterweise von selbst beim Einschlagen der Lenkeinrichtung mit einem Einschlagwinkel von 90°.

Bei einer weiteren bevorzugten Ausführungsform der Erfindung ist das Lenkerrohr und /oder die Gabelbrücke durch eine Feder - und/oder eine Dämpfereinrichtung am Rahmen abgestützt.

Dadurch entsteht vorteilhafterweise eine gefederte Vorderradführung für ein klappbares Zweirad, wobei diese sehr stabil ausgeführt ist, wenn der Rahmen und die Lenkeinrichtung miteinander durch einen Längslenker verbunden sind.

Zwei bevorzugte Ausführungsbeispiele der Erfindung sind in der nachfolgenden Beschreibung mit der zugehörigen Zeichnung dargestellt. Es zeigen:
- Figur 1: ein Fahrrad entsprechend der Erfindung, ohne Tret- und Kraftübertragungseinrichtung, im fahrbereiten, aufgebauten Zustand,
- Figur 2: das Fahrrad aus Figur 1 im aufgebauten Zustand ohne Vorderrad und - gestrichelt gezeichnet - im zusammengeklappten Zustand, mit eingeschwenktem hinteren Rahmenteil mit Hinterrad,
- Figur 3 und Figur 4: Darstellungen einer anderen Ausführungsform eines Fahrrads entsprechend Figur 1 und Figur 2, mit Hinterrad- und Vorderradfederung und
- Figur 5: das Tretlagergehäuse mit Drehgelenk zur Verbindung des vorderen Rahmenteils mit dem hinteren Rahmenteil.

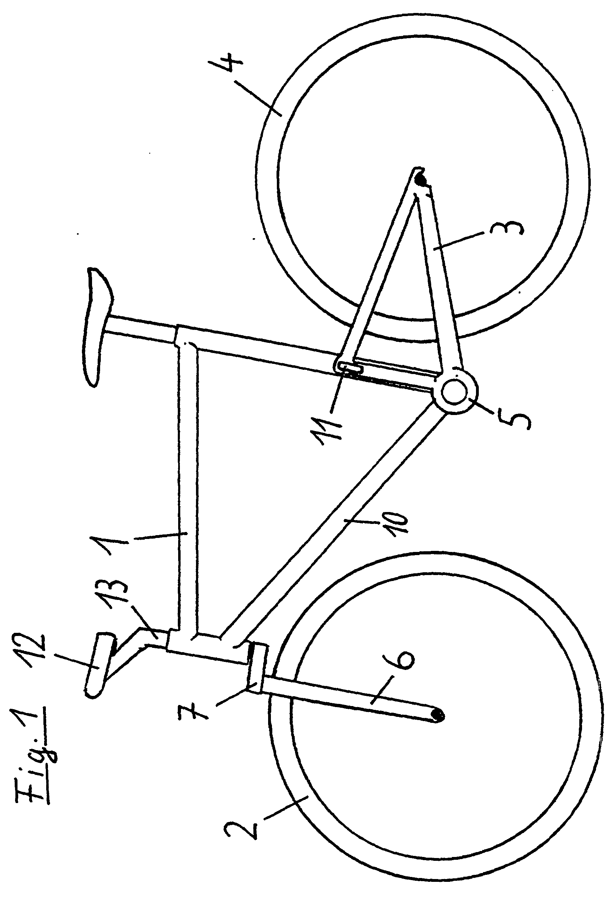

Nach Figur 1 besteht ein auf geringen Stauraum zusammenklappbares Fahrrad im wesentlichen aus einem vorderen Rahmenteil 1 mit einer Lenkeinrichtung für ein Vorderrad 2 und aus einem hinteren Rahmenteil 3 mit einem Hinterrad 4. Das vordere Rahmenteil 1 ist über ein Drehgelenk 5 mit dem hinteren Rahmenteil 3 verbunden, so daß beide Rahmenteile 1, 3 um die Achse des Drehgelenks 5, eine Querachse des Zweirads, kongruent zu einer nicht gezeichneten Tretlagerachse, gegeneinander verschwenkt werden können.

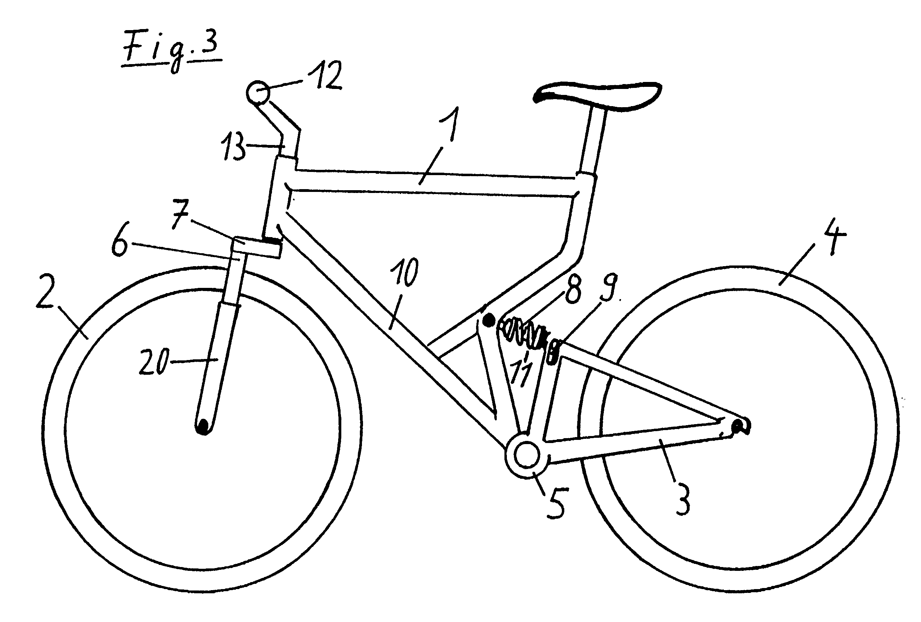

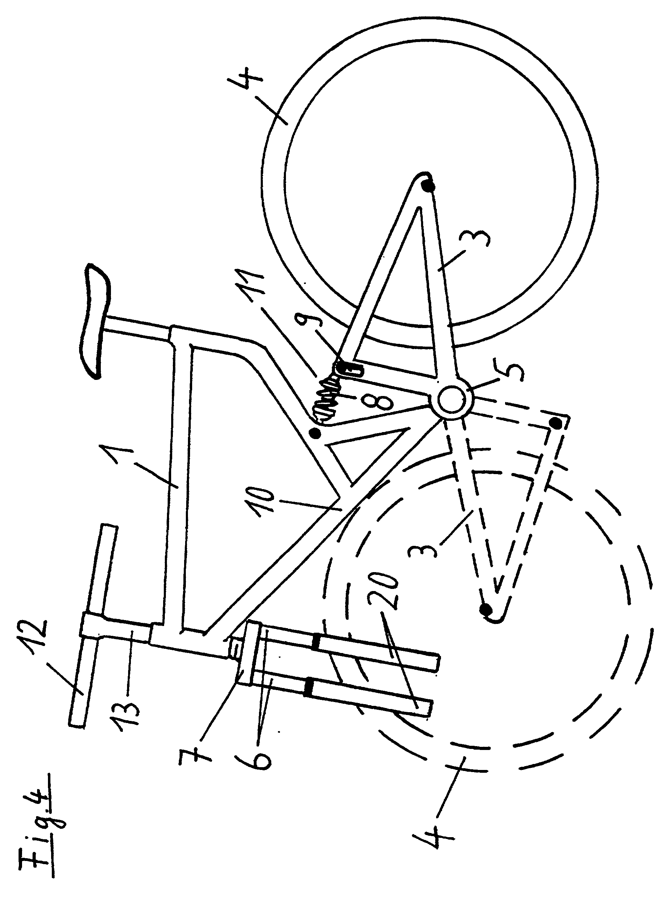

Im Fahrbetrieb wird das Zusammenklappen der beiden Rahmenteile 1, 3 dadurch verhindert, daß diese durch eine Abstützeinrichtung 11 miteinander verbunden sind. Diese Abstützeinrichtung 11 kann ein Feder- und/oder Dämpferelement 8 sein, das die beiden Rahmenteile 1, 3 gegeneinander abstützt (Figur 3 und Figur 4).

Ebenfalls kann eine Aufhängung des Vorderrades 2 federnd und/oder dämpfend ausgebildet sein, zum Beispiel, indem das Vorderrad 2 in einer dieses tragenden Gabel aus zwei Gabelrohren 6 und einer Gabelbrücke 7 aufgenommen ist, die durch einen nicht gezeichneten Längslenker mit dem vorderen Rahmenteil 1 verbunden ist. Bei dieser an sich bekannten Vorderradführung ist der Längslenker um eine weitere Querachse des Zweirades schwenkbar am vorderen Rahmenteil 1 angebracht und stützt sich durch ein nicht gezeichnetes weiteres Feder- und/oder Dämpferelement am vorderen Rahmenteil 1 ab. Mit der Gabelbrücke 7 ist er über ein nicht gezeichnetes Kugelgelenk verbunden.

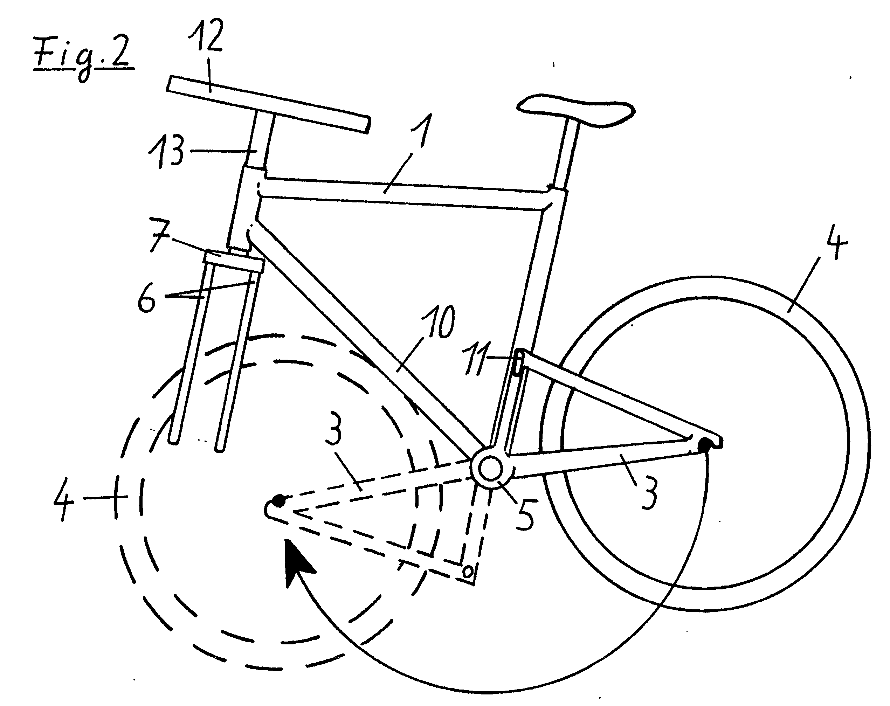

In der Ausführungsform der Ausführungsbeispiele entsprechend den Figuren 1 und 2 bzw. 3 und 4 ist allerdings die Lenkeinrichtung nicht federnd nachgiebig mit dem Rahmen verbunden, sondern im zweiten Fall sind die Gabelrohre 6 sind als Teleskopfederbeine 20 zur Federung und Dämpfung des Vorderrades 2 ausgebildet. Während beim Ausführungsbeispiel entsprechend den Figuren 1 und 2 kein Federund/oder Dämpferelement bei der Aufhängung des Vorderrads 2 verwendet wird.

Für eine Zusammenklappbarkeit des Zweirads auf möglichst geringen Stauraum ist das Feder- und/oder Dämpferelement 8 an seinem einen Ende durch einen angedeutet gezeichneten Schnellspannverschluß 9 mit dem hinteren Rahmenteil 3 verbunden. Wird dieser Schnellspannverschluß 9 von Hand gelöst, ist es möglich, die beiden Rahmenteile 1, 3 um das Drehgelenk 5 ohne Wegbegrenzung gegeneinander zu verschwenken, bis das Hinterrad 4 an das Vorderrad 2 anstößt. Wird, wie in Figur 2 oder Figur 4, das Vorderrad 2 ausgebaut und die Lenkeinrichtung von einer Stellung in Geradeausfahrt (Figur 1 und Figur 3) um 90° eingeschlagen (Figur 2 und Figur 4), so ist es möglich, das Hinterrad 4 mit dem hinteren Rahmenteil 3 noch weiter zu verschwenken, bis zur Anlage des Hinterrades 4 an einem unteren Rahmenrohr 10. Das Hinterrad 4 läßt sich deshalb so weit um das Drehgelenk 5 herum verschwenken, weil die Gabelrohre 6 zum Lenkerrohr 13 versetzt sind. Dieser Versatz zwischen den Längsachsen der Gabelrohre 6 und der Längsachse des Lenkerrohrs 13 wird durch die Gabelbrücke 7 gebildet und bewirkt, daß beim Einschlagen einer Lenkstange 12 und somit der Lenkeinrichtung um einen Einschlagwinkel von 90°, zwischen den Gabelrohren 6 und einer Fahrradmittenebene (die hier der Zeichenebene entspricht) ein Abstand vorhanden ist, der es erlaubt, daß das Hinterrad 4 beim Schwenken des hinteren Rahmenteils 3 mitgeschwenkt werden kann, ohne die Gabelrohre 6 zu berühren.

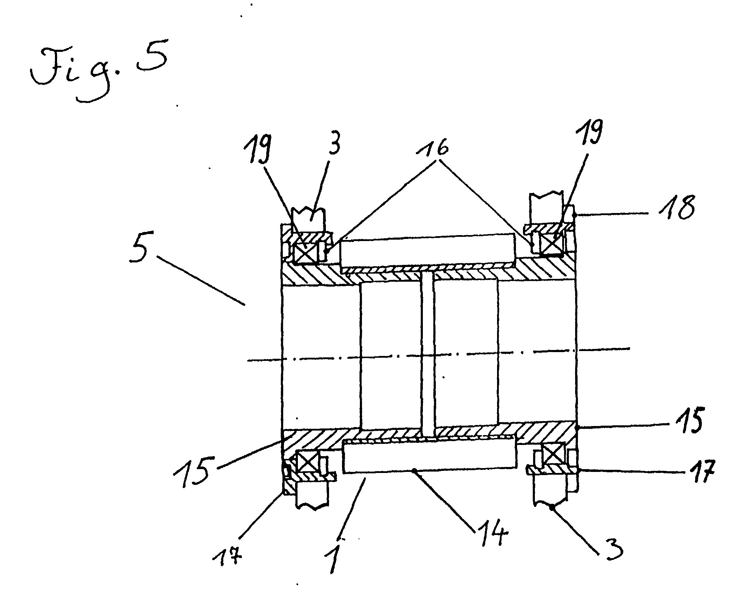

Figur 5 zeigt das Tretlagergehäuse mit dem Drehgelenk 5 zur Verbindung des vorderen Rahmenteils 1 mit dem hinteren Rahmenteil 3. Das vordere Rahmenteil 1 ist zur Bildung des Drehgelenks 5 als Hülse 14 gestaltet, in die auf beiden Seiten jeweils eine Tretlagerhülse 15 zur Aufnahme des nicht gezeichneten Tretlagers eingeschraubt ist. Am Außenumfang jeder Tretlagerhülse 15 sitzt, fixiert über je einen Seegerring 16 und je einen Lagerdeckel 17, je ein Lager 19 zur drehbaren Lagerung des hinteren Rahmenteils 3 auf der jeweiligen Tretlagerhülse 15. Der hintere Rahmenteil 3 umgreift dazu mit je einem an ihm ausgebildeten Auge den jeweiligen Lagerdeckel 17 an dessen Außenumfang und ist dort durch eine Nutmutter 18 festgelegt.

## Patentansprüche

1. Fahrrad mit einem Rahmen, mindestens bestehend aus einem vorderen Rahmenteil (1) mit einer Lenkeinrichtung für ein Vorderrad (2) und einem hinteren Rahmenteil (3) mit einem Hinterrad (4), wobei eine Verbindung zwischen vorderem und hinterem Rahmenteil (1 und 3) mindestens aus einem um eine Querachse des Fahrrads schwenkbaren Drehgelenk (5) besteht und die Querachse deckungsgleich mit einer Tretlagerachse ist und wobei die Lenkeinrichtung mindestens aus einer das Vorderrad (2) tragenden Gabel aus zwei Gabelrohren (6) und einer Gabelbrücke (7), aus einer Lenkstange (12) und aus einem die Lenkstange (12) und die Gabel verbindenden Lenkerrohr (13) besteht, **dadurch gekennzeichnet, daß** bei einem Einschlagwinkel der Lenkeinrichtung von neunzig Grad, zwischen den Gabelrohren (6) und einer Fahrradmittenebene ein Abstand vorhanden ist, der es erlaubt, daß das Hinterrad (4), beim Schwenken des hinteren Rahmenteils (3) um die Querachse, mitgeschwenkt werden kann, ohne die Gabelrohre (6) zu berühren.

2. Fahrrad nach Anspruch 1, **dadurch gekennzeichnet, daß** in einer Stellung der Lenkeinrichtung für Geradeausfahrt, zwischen den Längsachsen der Gabelrohre (6) und der Längsachse des Lenkerrohrs (13) ein Versatz in Längsrichtung des Fahrrads vorhanden ist.

3. Fahrrad nach Anspruch 1 oder 2, **dadurch gekennzeichnet, daß** das Lenkerrohr (13) und/oder die Gabelbrücke (7) durch eine Feder- und/oder Dämpfereinrichtung am Rahmen abgestützt ist.

4. Fahrrad nach einem der Ansprüche 1 bis 3, **dadurch gekennzeichnet, daß** der Rahmen und die Lenkeinrichtung miteinander durch einen Längslenker verbunden sind.

## Claims

1. A bicycle comprising a frame consisting at least of a front part (1) with a steering device for a front wheel (2) and a rear part (3) with a rear wheel (4), wherein a connection between the front and rear frame parts (1 and 3) consists at least of a swivel joint (5) rotatable around a transverse axis of the bicycle and the transverse axis coincides with a pedals and bottom bracket bearing axis and wherein the steering device consists of at least one fork bearing the front wheel (2) and comprising two fork tubes (6) and a fork bridge (7), a handlebar (12) and a steering column (13) connecting the handlebar (12) and the fork, **characterised in that** when the steering device is at a steering-lock angle of 90° a spacing is left between the fork tube (6) and a central plane of the bicycle sufficient for the rear wheel (4) to be entrained when the rear frame part (3) is rotated around the transverse axis, without touching the fork tubes (6).

2. A bicycle according to claim 1, **characterised in that** when the steering device is in a position for travel straight ahead, an offset in the longitudinal direction of the bicycle is available between the longitudinal axes of the fork tubes (6) and the longitudinal axis of the steering column (13).

3. A bicycle according to claim 1 or 2, **characterised in that** the steering column (13) and/or the fork bridge (7) are braced on the frame by a spring and/or stabilising device.

4. A bicycle according to any of claims 1 to 3, **characterised in that** the frame and the steering device are connected by a longitudinal control arm.

## Revendications

1. Bicyclette comprenant un cadre au moins constitué par un élément de cadre avant (1) comprenant un dispositif de guidage pour une roue avant (2) et un élément de cadre arrière (3) comprenant une roue arrière (4), une liaison entre les éléments de cadre avant et arrière (1 et 3) étant formée par au moins une articulation tournante (5) pivotant autour d'un axe transversal de la bicyclette, et l'axe transversal coïncidant avec un axe de palier de pédalier, et le dispositif de guidage comprenant au moins une fourche portant la roue avant (2) et étant constituée par deux tubes de fourche (6) et un pont de fourche (7) constitué par un guidon (12) et un tube de guidon (13) reliant le guidon (12) et la fourche,
**caractérisée en ce que**
pour un angle de braquage du dispositif de guidage de 90°, entre les tubes de fourche (6) et le plan central de la bicyclette existe une distance permettant, lors du pivotement de l'élément de cadre arrière (3) autour de l'axe transversal, de faire pivoter également la roue arrière (4) sans qu'elle ne touche les tubes de fourche (6).

2. Bicyclette selon la revendication 1,
**caractérisée en ce que**
dans une position du dispositif de guidage pour rouler en ligne droite, un décalage dans le sens longitudinal de la bicyclette existe entre les axes longitudinaux de tubes de fourche (6) et l'axe longitudinal du tube de guidon (13).

3. Bicyclette selon la revendication 1 ou 2,
**caractérisée en ce que**
le tube de guidon (13) et/ou le pont de fourche (7) est logé en appui sur le cadre au moyen d'un dispositif élastique et/ou amortisseur.

4. Bicyclette selon l'une quelconque des revendications précédentes,
**caractérisée en ce que**
le cadre et le dispositif de guidage sont reliés l'un à l'autre par un guidon longitudinal.
